**Europäisches Patentamt**

**European Patent Office**

**Office européen des brevets**

(19)

(11) Veröffentlichungsnummer: **0 276 435 B1**

# (12) EUROPÄISCHE PATENTSCHRIFT

(45) Veröffentlichungstag der Patentschrift: **27.12.91**

(51) Int. Cl.⁵: **B60T 8/52**

(21) Anmeldenummer: **87118323.2**

(22) Anmeldetag: **10.12.87**

(54) **Bremseinrichtung für Kraftfahrzeuge.**

(30) Priorität: **30.01.87 DE 3702687**

(43) Veröffentlichungstag der Anmeldung:
**03.08.88 Patentblatt 88/31**

(45) Bekanntmachung des Hinweises auf die
Patenterteilung:
**27.12.91 Patentblatt 91/52**

(84) Benannte Vertragsstaaten:
**DE FR GB IT NL SE**

(56) Entgegenhaltungen:
**EP-A- 0 223 358        DE-A- 2 043 278**
**DE-A- 3 600 647        FR-A- 2 085 295**
**FR-A- 2 305 775        GB-A- 2 078 322**

(73) Patentinhaber: **ROBERT BOSCH GMBH**
**Postfach 50**
**W-7000 Stuttgart 1(DE)**

(72) Erfinder: **Grauel, Ingolf, Dipl.-Ing.**
**Lessingstrasse 6**
**W-7143 Vaihingen/Enz(DE)**
Erfinder: **Stumpe, Werner, Dipl.-Ing.**
**Goerdelerstrasse 10**
**W-7014 Kornwestheim(DE)**

## Beschreibung

### Stand der Technik

Die Erfindung bezieht sich auf eine Bremseinrichtung nach der Gattung des Hauptanspruchs. Eine derartige Bremseinrichtung ist bekannt (GB-A-20 78 322).

Diese bekannte Bremseinrichtung arbeitet weitgehend automatisch und läßt dem Fahrer keine Eingriffsmöglichkeit. Sie ist deshalb für Straßenfahrzeuge nicht geeignet.

Der Erfindung liegt die Aufgabe zugrunde, diesen Nachteil zu vermeiden und eine Bremseinrichtung zu schaffen, die bei allen Gelegenheiten den vom Fahrer gewünschten Bremsdruck einsteuern kann.

Diese besondere Steuerung soll ohne großen Mehraufwand zu erstellen sein. Schließlich sollen für die Erlangung einer derartigen Bremseinrichtung handelsübliche Komponenten verwendbar sein.

Diese Aufgabe wird gemäß der Erfindung bei einer gattungsgemäßen Bremseinrichtung durch die kennzeichnenden Merkmale des Patentanspruchs gelöst.

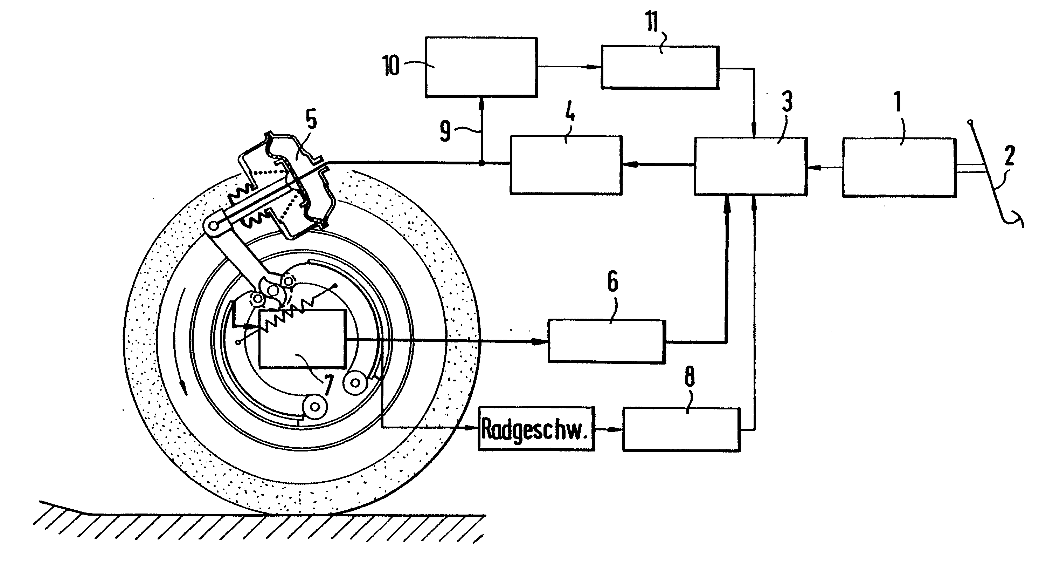

Ein Ausführungsbeispiel der Erfindung ist in der Zeichnung dargestellt und in der nachfolgenden Beschreibung näher erläutert.

### Beschreibung des Ausführungsbeispieles

Eine Bremseinrichtung hat einen Bremswertgeber 1, der vom Fahrer über ein Pedal 2 betätigbar ist. Der Bremswertgeber 1 ist zur Abgabe eines dem Grad seiner Betätigung entsprechenden mittel- oder unmittelbaren Spannungssignals oder digitalen Signals an ein elektronisches Steuergerät 3 bestimmt.

An das elektronische Steuergerät 3 sind ein Bremsventil 4 mit nachgeordnetem Radbremszylinder 5, ein Sensor 6 zum Erfassen des Bremsmoments 7 und ein Sensor 8 für die Radgeschwindigkeit angeschlossen.

Zwischen dem Bremsventil 4 und dem Radbremszylinder 5 nimmt eine Druckmittel-Leitung 9 ihren Ausgang, die zu einem Druckaufnehmer 10 geführt ist. Der Druckaufnehmer 10 ist an einen Sensor 11 angeschlossen, der Verbindung mit dem elektronischen Steuergerät 3 hat.

### Wirkungsweise

In dem elektronischen Steuergerät 3 sind Kennlinien oder Parameterlisten für Bremsdruck- und Bremsmomentverlauf in Abhängigkeit von der Bremswertgebervorgabe gespeichert. Die erfahrungsmäßigen Reibwertschwankungen in der Bremse sind in den abgespeicherten Parametern berücksichtigt.

Vom Fahrer wird zum Zwecke des Bremsens das Pedal 2 betätigt und über den Bremswertgeber 1 in dem elektronischen Steuergerät 3 ein Sollwert vorgegeben. Das elektronische Steuergerät 3 steuert das Bremsventil 4 an, das aus einer nicht dargestellten Energiequelle Druck in den Bremszylinder 5 gelangen läßt. Der Radbremszylinder 5 spannt die Bremsen an die Bremstrommel bzw. an die Bremsscheibe.

Auf diese Weise entsteht ein Bremsmoment. Das Bremsmoment wird durch den Bremsmoment-Abgreifer 7 mit Sensor 6 gemessen und als Ist-wert-Signal dem elektronischen Steuergerät 3 zugeführt. Dadurch kann dann über das elektronische Steuergerät 3 das Ist-Bremsmoment an das vorgegebenen Soll-Bremsmoment angeglichen werden.

Nun kann es aber vorkommen, daß kein Bremsmoment meßbar ist, z.B. beim Stillstand des Fahrzeuges in der Ebene, oder daß nur ein sehr kleines, kaum meßbares Bremsmoment auftritt, z.B. beim Stillstand des Fahrzeuges am Berg; auch im Fall der Arbeit eines Blockierschutzes, wenn das maximale Bremsmoment durch die Verhältnisse zwischen Reifen und Straße begrenzt wird, kann das Bremsmoment sehr klein sein. Dann wäre ohne die erfindungsgemäße Einrichtung immer die volle Druckeinsteuerung wirksam.

Um dies zu verhindern, ist gemäß der Erfindung an die Verbindungsleitung zwischen Bremsventil 4 und Radbremszylinder 5 eine Leitung 9 und ein Druckaufnehmer 10 angeschlossen, der über einen Sensor 11 ein Signal über die Höhe des jeweiligen Bremsdruckes an das elektronische Steuergerät 3 liefert. Dadurch ist hier ein Regelkreis 9, 10, 11 geschaffen, der eine Hilfsregelung gewährleistet, wenn das Ist-Bremsmoment kleiner als das Soll-Bremsmoment ist.

Mit diesem Hilfsregelkreis 9, 10, 11 wird erreicht, daß auch bei schlecht meßbaren Bremsmomenten definierte Bremskräfte erzeugbar sind. Er erlaubt - auch, durch den Vergleich Bremsdruck zu Bremsmoment - einen Rückschluß auf den jeweiligen Zustand der Bremse. Zu diesem Zweck wird erst einmal über das elektronische Steuergerät 3 ein Erfahrungs-Druckwert in die Bremsanlage eingegeben und dann dieser vorgegebene Bremswert über das dabei auftretende Bremsmoment feingeregelt. Bei Fahrzeugstillstand findet nur eine Grob-Regelung über den Bremsdruck statt, weil das meßbare Bremsmoment trotz Druckerhöhung nicht ansteigen kann.

Dazu kommt, daß der Hilfsbremskreis 9, 10 11 dadurch auch Energie spart, beispielsweise Pumpendruck oder verdichtete Luft, weil die Bremsen nicht über Gebühr angezogen werden.

Zur Komplettierung der Bremseinrichtung ist schließlich noch ein Blockierschutz vorgesehen, dessen Radgeschwindigkeitssensor ein entsprechendes Signal an das elektronische Steuergerät 3 liefert.

## Patentansprüche

1. Bremseinrichtung für Fahrzeuge mit einem elektronischen Steuergerät (3), dem ein Bremsdrucksignal (Druckaufnehmer 10), ein Radgeschwindigkeitssignal (sensor 8) und ein Signal von einem Bremsmomentsensor (6) als Ist-Wert zuführbar sind und das abhängig von diesen Signalen einen Bremsdruck für einen Rad-Bremszylinder (5) steuert, dadurch gekennzeichnet, daß an das Steuergerät (3) ein fußbetätigbarer Bremswertgeber (1) angeschlossen ist, der das Steuergerät (3) mit einem Solldruck-Signal beschickt, und daß im elektrischen Steuergerät (3) zum Ermitteln eines entsprechenden Signals für das den Bremsdruck einsteuernde Bremsventil (4) ein Erfahrungswertspeicher und ein Vergleicher für Soll- und Ist-Druck vorgesehen sind.

## Claims

1. Brake system for vehicles with an electronic control device (3), to which a brake-pressure signal (pressure pick-up 10), a wheel-speed signal (sensor 8) and a signal from a braking-torque sensor (6) can be fed as actual value and which controls a brake pressure for a wheel-brake cylinder (5) as a function of these signals, characterised in that connected to the control device (3) is a foot-actuable braking-power transmitter (1) which supplies the control device (3) with a setpoint pressure signal, and in that a memory for a value based on experience and a comparator for the setpoint and actual pressure are provided in the electronic control device (3) for the purpose of determining a corresponding signal for the brake valve (4) feeding in the brake pressure.

## Revendications

1. Système de freinage pour véhicules comportant un dispositif électronique de commande (3) qui reçoit un signal de pression de frein (capteur de pression 10), un signal de vitesse de roue (capteur 8) et un signal de capteur de couple de freinage (6) comme valeurs réelles, et en fonction de ces signaux, il commande une pression de frein pour un cylindre de roue de frein (5), caractérisé en ce qu'un capteur de valeur de frein à commande par le pied est relié au dispositif de commande (3), ce capteur fournissant un signal de pression de consigne au dispositif de commande (3) et en ce que dans le dispositif (3), pour déterminer un signal correspondant destiné au maître-cylindre de frein (4) qui commande la pression de frein, sont prévus une mémoire contenant une valeur résultant de l'expérience et un comparateur pour la pression de consigne et la pression réelle.